# DEMANDE DE BREVET EUROPEEN

(11) **EP 3 381 639 A1**
(43) Date de publication de la demande: **03.10.2018**
(21) Numéro de dépôt: 18164091.3
(22) Date de dépôt: 26.03.2018
(51) Int. Cl.: B29C 44/14, B29C 44/12, B29C 33/12, B60N 2/00, B29K 75/00, B29L 31/58

(54) **PROCÉDÉ DE RÉALISATION D'UNE MATELASSURE DE SIÈGE DE VÉHICULE AUTOMOBILE**

(30) Priorité: 27.03.2017 FR 1752527
(71) Demandeur: TESCA France, 75008 Paris (FR)
(72) Inventeur: GEORGES, Laurent, 08190 ROIZY (FR)
(74) Mandataire: Sayettat, Julien Christian

(57) **Abrégé**

L'invention concerne un procédé comprenant les étapes suivantes : prévoir une coiffe (2) comprenant un format (3) d'un seul tenant ; prévoir un moule comprenant un premier (6) et un deuxième (7) sous-ensemble actionnables en fermeture, ledit premier sous-ensemble comprenant un premier (9) et un deuxième (10) élément ; actionner lesdits éléments vers leur configuration rapprochée de manière à pincer ladite coiffe au moins en partie sur ledit format ; injecter un mélange précurseur de mousse de polyuréthanne élastiquement compressible ; déplacer lesdites parties en configuration écartée ; mettre en place un film (19) thermoplastique étanche qui est agencé pour se dégrader au contact de la mousse en cours d'expansion.

## Description

L'invention concerne un procédé de réalisation d'une matelassure de siège de véhicule automobile, une matelassure ainsi obtenue et un siège comprenant une telle matelassure.

Il est connu de mettre en oeuvre un procédé de réalisation d'une matelassure de siège de véhicule automobile, ledit procédé comprenant les étapes suivantes :
- prévoir une coiffe comprenant deux formats reliés l'un à l'autre par une couture, lesdits formats comprenant une couche de revêtement et une sous-couche élastiquement compressible à base de mousse,
- prévoir un moule comprenant un premier et un deuxième sous-ensemble actionnables en fermeture de manière à définir au moins en partie une cavité de moulage, ledit moule présentant les caractéristiques suivantes :
   ∘ ledit premier sous-ensemble comprend un premier et un deuxième élément définissant respectivement une première et une deuxième fraction de paroi de ladite cavité,
   ∘ lesdits éléments peuvent être écartées l'un de l'autre depuis une configuration rapprochée, dans laquelle ils sont séparés l'un de l'autre par une fente permettant un pincement de ladite coiffe, vers une configuration écartée, dans laquelle ils sont séparés l'un de l'autre par une fente élargie permettant un passage de ladite coiffe,
- lesdits éléments étant en configuration écartée, faire passer ladite coiffe à travers ladite fente élargie, de sorte que ladite coiffe présente ledit premier format disposée dans ladite cavité, ladite couche de revêtement étant tournée vers ladite paroi, et ledit deuxième format saillant de ladite cavité, ladite couture étant positionnée au niveau de ladite fente,
- actionner lesdits éléments vers leur configuration rapprochée de manière à pincer ladite coiffe entre lesdits formats au niveau de ladite couture,
- injecter un mélange précurseur de mousse de polyuréthanne élastiquement compressible dans ladite cavité, de manière à former par expansion de ladite mousse un bloc de rembourrage,
- déplacer lesdites parties en configuration écartée et démouler ladite matelassure obtenue, ladite matelassure présentant ledit premier format surmoulé par ledit bloc et ledit deuxième format non surmoulée par ledit bloc.

On peut notamment prévoir que le premier format soit disposé en zone centrale de la matelassure, formant un médaillon, le deuxième format étant disposée au moins latéralement.

Dans ce cas, du fait de la non cohésion entre la mousse du bloc et le deuxième format, on évite le risque de déchirure de la mousse en partie latérale du fait des entrées/sorties des passagers qui réalisent un pliage répété dudit format dans un sens et dans l'autre.

La raison pour laquelle on dispose la couture au niveau de la fente est dictée par le fait que la sous-couche, du fait de son caractère poreux, est pénétrée sur une fraction de son épaisseur par la mousse du bloc lors de son expansion.

Or, une telle pénétration de la mousse conduit à une rigidification de la sous-couche.

Outre le fait qu'une telle rigidification de la sous-couche est préjudiciable pour le confort de la matelassure, elle interdit de réaliser la lisière entre la partie surmoulée de la coiffe et la partie non surmoulée ailleurs que dans la zone de couture.

En effet, dans le cas où cette lisière est disposée en zone de couture, la pénétration de la mousse dans ladite zone est non détectable visuellement par un occupant du siège, la présence de la couture occasionnant une rupture visuelle franche entre les formats.

A contrario, il est constaté que toute tentative visant à disposer cette lisière ailleurs qu'en zone de couture conduit à une matelassure d'aspect rédhibitoire, ceci en raison de la pénétration de la mousse dans la sous-couche qui fait apparaitre, au niveau de la lisière, un marquage sur la face d'aspect de la couche de revêtement, ledit marquage formant une discontinuité visuelle inesthétique.

Il en résulte que la conception de la matelassure est fortement conditionnée par le positionnement de la/des couture/s.

L'invention a pour but de proposer un procédé permettant que la lisière entre la partie surmoulée de la coiffe et la partie non surmoulée soit située ailleurs que dans la zone de couture, une telle façon de faire permettant alors une grande liberté de conception de la matelassure.

A cet effet, et selon un premier aspect, l'invention propose un procédé de réalisation d'une matelassure de siège de véhicule automobile, ledit procédé comprenant les étapes suivantes :
- prévoir une coiffe comprenant un format d'un seul tenant, ledit format comprenant une couche de revêtement et une sous-couche élastiquement compressible à base de mousse,
- prévoir un moule comprenant un premier et un deuxième sous-ensemble actionnables en fermeture de manière à définir au moins en partie une cavité de moulage, ledit moule présentant les caractéristiques suivantes :
   ∘ ledit premier sous-ensemble comprend un premier et un deuxième élément définissant respectivement une première et une deuxième fraction de paroi de ladite cavité,
   ∘ lesdits éléments peuvent être écartées l'un de l'autre depuis une configuration rapprochée, dans laquelle ils sont séparés l'un de l'autre par une fente permettant un pincement de ladite coiffe, vers une configuration écartée, dans laquelle ils sont séparés l'un de l'autre par une fente élargie permettant un passage de ladite coiffe,
- lesdits éléments étant en configuration écartée, faire passer ladite coiffe à travers ladite fente élargie, de sorte que ladite coiffe présente une première zone disposée dans ladite cavité, ladite couche de revêtement étant tournée vers ladite paroi, et une deuxième zone saillant de ladite cavité,
- actionner lesdits éléments vers leur configuration rapprochée de manière à pincer ladite coiffe entre lesdites zones,
- injecter un mélange précurseur de mousse de polyuréthanne élastiquement compressible dans ladite cavité, de manière à former par expansion de ladite mousse un bloc de rembourrage,
- déplacer lesdites parties en configuration écartée et démouler ladite matelassure obtenue, ladite matelassure présentant ladite première zone surmoulée par ledit bloc et ladite deuxième zone non surmoulée par ledit bloc,
ledit procédé présentant en outre les caractéristiques suivantes :
- le pincement de ladite coiffe est effectué, au moins en partie, sur ledit format, de sorte que ledit format présente une partie surmoulée et une partie non surmoulée par ledit bloc,
- il comprend une étape supplémentaire, réalisée entre le pincement de ladite coiffe et l'injection dudit mélange précurseur de mousse, de mise en place d'un film thermoplastique étanche sur ladite première zone et en recouvrement de ladite fente, ledit film étant agencé pour se dégrader au contact de la mousse dudit bloc en cours d'expansion, de manière à permettre un surmoulage de ladite première zone par ladite mousse tout en empêchant sensiblement la pénétration de ladite mousse dans l'épaisseur de ladite sous-couche, notamment au niveau de ladite fente.

Avec le procédé proposé, la pénétration de mousse dans la sous-couche est sensiblement évitée.

Il en résulte que, dans le cas où la lisière entre les zones surmoulée et non surmoulée est disposée hors de la zone de couture, la pénétration de la mousse au niveau de ladite lisière ne crée pas de marquage sur la face d'aspect de la couche de revêtement ; il en résulte une grande liberté de conception de la matelassure réalisée par un tel procédé.

Selon d'autres aspects, l'invention propose une matelassure ainsi obtenue et un siège comprenant une telle matelassure.

D'autres particularités et avantages de l'invention apparaîtront dans la description qui suit, faite en référence aux figures jointes, dans lesquelles :
- la figure 1 est une vue schématique en perspective d'une matelassure selon une réalisation,
- la figure 2 est une vue schématique en coupe partielle de la matelassure de la figure 1 en cours de fabrication, le bloc de rembourrage étant en cours d'expansion.

En référence aux figures, on décrit un procédé de réalisation d'une matelassure 1 de siège de véhicule automobile, ledit procédé comprenant les étapes suivantes :
- prévoir une coiffe 2 comprenant un format 3 d'un seul tenant, ledit format comprenant une couche de revêtement 4 et une sous-couche 5 élastiquement compressible à base de mousse, notamment de polyuréthanne,
- prévoir un moule comprenant un premier 6 et un deuxième 7 sous-ensemble actionnables en fermeture de manière à définir au moins en partie une cavité 8 de moulage, ledit moule présentant les caractéristiques suivantes :
   ∘ ledit premier sous-ensemble comprend un premier 9 et un deuxième 10 élément définissant respectivement une première 11 et une deuxième 12 fraction de paroi de ladite cavité,
   ∘ lesdits éléments peuvent être écartées l'un de l'autre depuis une configuration rapprochée, dans laquelle ils sont séparés l'un de l'autre par une fente 13 permettant un pincement de ladite coiffe, vers une configuration écartée, dans laquelle ils sont séparés l'un de l'autre par une fente élargie permettant un passage de ladite coiffe,
- lesdits éléments étant en configuration écartée, faire passer ladite coiffe à travers ladite fente élargie, de sorte que ladite coiffe présente une première zone 14 disposée dans ladite cavité, ladite couche de revêtement étant tournée vers ladite paroi, et une deuxième zone 15 saillant de ladite cavité,
- actionner lesdits éléments vers leur configuration rapprochée de manière à pincer ladite coiffe entre lesdites zones,
- injecter un mélange précurseur de mousse de polyuréthanne élastiquement compressible dans ladite cavité, de manière à former par expansion de ladite mousse un bloc 16 de rembourrage,
- déplacer lesdites parties en configuration écartée et démouler ladite matelassure obtenue, ladite matelassure présentant ladite première zone surmoulée par ledit bloc et ladite deuxième zone non surmoulée par ledit bloc,
ledit procédé présentant en outre les caractéristiques suivantes :
- le pincement de ladite coiffe est effectué, au moins en partie, sur ledit format, de sorte que ledit format présente une partie surmoulée 17 et une partie non surmoulée 18 par ledit bloc,
- il comprend une étape supplémentaire, réalisée entre le pincement de ladite coiffe et l'injection dudit mélange précurseur de mousse, de mise en place d'un film 19 thermoplastique étanche sur ladite première zone et en recouvrement de ladite fente, ledit film étant agencé pour se dégrader - notamment par fusion ou par création de micro-perforations - au contact de la mousse dudit bloc en cours d'expansion, de manière à permettre un surmoulage de ladite première zone par ladite mousse tout en empêchant sensiblement la pénétration de ladite mousse dans l'épaisseur de ladite sous-couche, notamment au niveau de ladite fente.

Selon une réalisation, le film 19 est à base de polyuréthanne.

Selon une réalisation, le point de fusion du film 19 est compris entre 40 et 60°C.

Selon une réalisation, l'indice de fluidité en masse du film 19, mesuré selon la norme NF T 51-016 à 190°C avec un rhéomètre capillaire à écoulement forcé dont le piston est chargé avec une masse de 2,160 kg, est supérieur à 15 g/10 min.

Dans ce cas, l'indice de fluidité en masse du film 19, mesuré selon la norme NF T 51-016 à 190°C avec un rhéomètre capillaire à écoulement forcé dont le piston est chargé avec une masse de 2,160 kg, est inférieur à 50 g/10 min, peut être notamment égal à 25±3 g/10 min.

Le film 19 peut notamment présenter une capacité d'allongement très importante avant déchirure, notamment supérieure à 800%.

Selon une réalisation, le film 19 présente une épaisseur de 15±3 microns, et notamment une épaisseur de 15±1 microns.

Selon une réalisation, le film 19 présente en analyse calorimétrie différentielle à balayage (DSC), réalisée selon la norme ISO 11357, un pic de fusion situé à 49±2°C.

Selon une réalisation, le polyol utilisé pour réaliser le film 19 est à base de polyester.

Selon une réalisation, l'isocyanate utilisé pour réaliser le film 19 comprend un groupe aromatique.

Selon une réalisation, la sous-couche 5 présente une densité de 0,028±0,002.

Selon la réalisation représentée, le format 3 est associé à au moins un autre format 20 par couture 21, ladite couture étant ici positionnée dans le moule une fois le pincement de la coiffe 2 effectué.

On décrit à présent une matelassure 1 réalisée par un tel procédé, ladite matelassure comprenant :
- un bloc 16 de rembourrage en mousse élastiquement compressible,
- une coiffe 2 de revêtement dudit bloc, ladite coiffe comprenant un format 3 d'un seul tenant, ledit format comprenant une couche de revêtement 4 et une sous-couche 5 élastiquement compressible à base de mousse, notamment de polyuréthanne, ledit format présentant une partie surmoulée 17 et une partie non surmoulée 18 par ledit bloc.

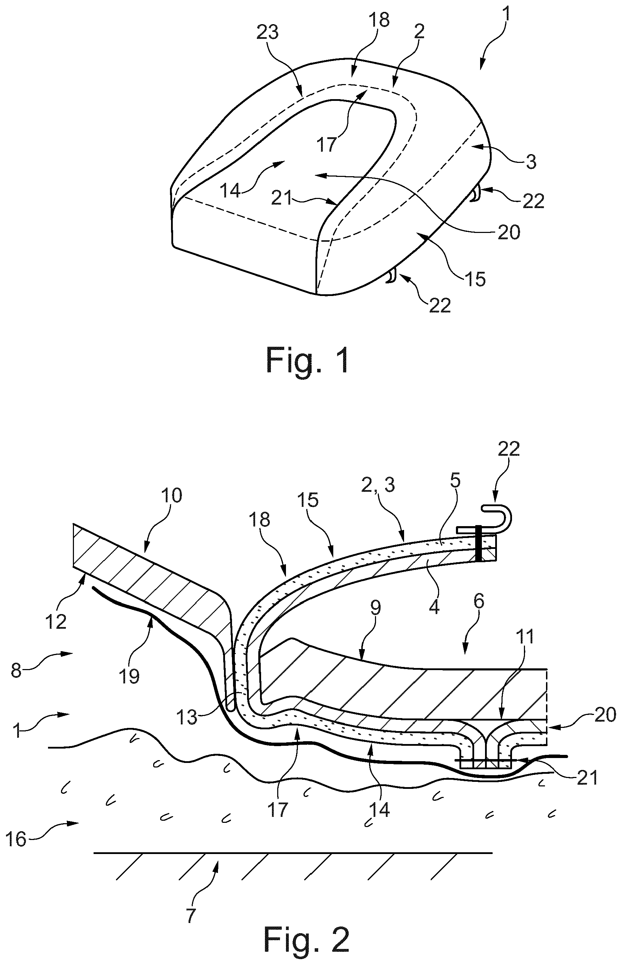

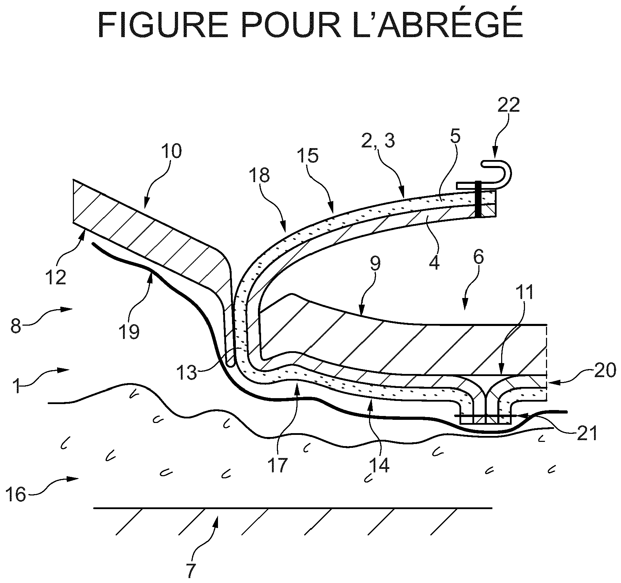

Sur la figure 1 a été représentée, en pointillés, la lisière 23 entre les parties 17,18.

On décrit enfin, de façon non représentée, un siège de véhicule automobile comprenant une telle matelassure 1, ladite matelassure étant montée sur une armature dudit siège, la deuxième zone 15 de coiffe 2 étant pourvue de moyens d'accrochage 22 périphériques à ladite armature de manière à être tendue contre le bloc 16 de rembourrage.

## Revendications

1. Procédé de réalisation d'une matelassure (1) de siège de véhicule automobile, ledit procédé comprenant les étapes suivantes :
• prévoir une coiffe (2) comprenant un format (3) d'un seul tenant, ledit format comprenant une couche de revêtement (4) et une sous-couche (5) élastiquement compressible à base de mousse,
• prévoir un moule comprenant un premier (6) et un deuxième (7) sous-ensemble actionnables en fermeture de manière à définir au moins en partie une cavité (8) de moulage, ledit moule présentant les caractéristiques suivantes :
∘ ledit premier sous-ensemble comprend un premier (9) et un deuxième (10) élément définissant respectivement une première (11) et une deuxième (12) fraction de paroi de ladite cavité,
∘ lesdits éléments peuvent être écartées l'un de l'autre depuis une configuration rapprochée, dans laquelle ils sont séparés l'un de l'autre par une fente (13) permettant un pincement de ladite coiffe, vers une configuration écartée, dans laquelle ils sont séparés l'un de l'autre par une fente élargie permettant un passage de ladite coiffe,
• lesdits éléments étant en configuration écartée, faire passer ladite coiffe à travers ladite fente élargie, de sorte que ladite coiffe présente une première zone (14) disposée dans ladite cavité, ladite couche de revêtement étant tournée vers ladite paroi, et une deuxième zone (15) saillant de ladite cavité,
• actionner lesdits éléments vers leur configuration rapprochée de manière à pincer ladite coiffe entre lesdites zones,
• injecter un mélange précurseur de mousse de polyuréthanne élastiquement compressible dans ladite cavité, de manière à former par expansion de ladite mousse un bloc (16) de rembourrage,
• déplacer lesdites parties en configuration écartée et démouler ladite matelassure obtenue, ladite matelassure présentant ladite première zone surmoulée par ledit bloc et ladite deuxième zone non surmoulée par ledit bloc,
ledit procédé étant **caractérisé en ce que** :
• le pincement de ladite coiffe est effectué, au moins en partie, sur ledit format, de sorte que ledit format présente une partie surmoulée (17) et une partie non surmoulée (18) par ledit bloc,
• il comprend une étape supplémentaire, réalisée entre le pincement de ladite coiffe et l'injection dudit mélange précurseur de mousse, de mise en place d'un film (19) thermoplastique étanche sur ladite première zone et en recouvrement de ladite fente, ledit film étant agencé pour se dégrader au contact de la mousse dudit bloc en cours d'expansion, de manière à permettre un surmoulage de ladite première zone par ladite mousse tout en empêchant sensiblement la pénétration de ladite mousse dans l'épaisseur de ladite sous-couche, notamment au niveau de ladite fente.

2. Procédé selon la revendication 1, **caractérisé en ce que** le film (19) est à base de polyuréthanne.

3. Procédé selon l'une des revendications 1 ou 2, **caractérisé en ce que** le point de fusion du film (19) est compris entre 40 et 60°C.

4. Procédé selon l'une quelconque des revendications 1 à 3, **caractérisé en ce que** l'indice de fluidité en masse du film (19), mesuré selon la norme NF T 51-016 à 190°C avec un rhéomètre capillaire à écoulement forcé dont le piston est chargé avec une masse de 2,160 kg, est supérieur à 15 g/10 min.

5. Procédé selon la revendication 4, **caractérisé en ce que** l'indice de fluidité en masse du film (19), mesuré selon la norme NF T 51-016 à 190°C avec un rhéomètre capillaire à écoulement forcé dont le piston est chargé avec une masse de 2,160 kg, est inférieur à 50 g/10 min, étant notamment égal à 25±3 g/10 min.

6. Procédé selon l'une quelconque des revendications 1 à 5, **caractérisé en ce que** le film (19) présente une épaisseur de 15±3 microns, et notamment une épaisseur de 15±1 microns.

7. Procédé selon l'une quelconque des revendications 1 à 6, **caractérisé en ce que** le film (19) présente en analyse calorimétrie différentielle à balayage (DSC), réalisée selon la norme ISO 11357, un pic de fusion situé à 49±2°C.

8. Matelassure réalisée par un procédé selon l'une quelconque des revendications 1 à 7, ladite matelassure comprenant :
• un bloc (16) de rembourrage en mousse élastiquement compressible,
• une coiffe (2) de revêtement dudit bloc, ladite coiffe comprenant un format (3) d'un seul tenant, ledit format comprenant une couche de revêtement (4) et une sous-couche (5) élastiquement compressible à base de mousse, ledit format présentant une partie surmoulée (17) et une partie non surmoulée (18) par ledit bloc.

9. Siège de véhicule automobile comprenant une matelassure (1) selon la revendication 8, ladite matelassure étant montée sur une armature dudit siège, la deuxième zone (15) de coiffe (2) étant pourvue de moyens d'accrochage (22) périphériques à ladite armature de manière à être tendue contre le bloc (16) de rembourrage.
